# EUROPEAN PATENT APPLICATION

(11) **EP 0 694 726 A1**
(43) Date of publication of application: **31.01.1996**
(21) Application number: 95305015.0
(22) Date of filing: 19.07.1995
(51) Int. Cl.: F16L 37/14, F16L 9/12, F16L 47/06

(54) **High strength pipe joint with pressed key groove**

(30) Priority: 19.07.1994 US 277340
(71) Applicant: AMERON, INC., Pasadena, CA 91101-2894 (US)
(72) Inventor: Tolhoek, Peter, NL-4854 AC Bavel (NL)
(74) Representative: Enskat, Michael Antony Frank

(57) **Abstract**

A method for forming a key groove in a fibre reinforced plastic pipe is disclosed. The method comprises wrapping a mandrel with uncured resin coated fibres, and pressing a key groove into the outside surface of the pipe, without breaking appreciable fibres. To form a key groove (6,7), a clamp comprising two semi-cylindrical metal halves (10,12) joined with a hinge (14,15) and provided with a circumferentially extending ridge on its inside surface may be closed around the end portion of the uncured pipe. A pipe with a key groove in the outer surface having substantially unbroken reinforcing fibres in the region containing the key groove, and a pipe joint incorporating such a pipe are disclosed.

## Description

Fiber reinforced plastic pipe and fittings have been produced by winding uncured resin coated glass fiber strands around a mandrel until the thickness approximately equals the thickness of the pipe wall desired. After curing, the mandrel is removed, resulting in a finished section of pipe. One type of joint for such fiber reinforced plastic pipes and fittings can be called a "bell and spigot" joint. In this form of joint, the end of one section of pipe (the "bell" end) fits over the end of another (the "spigot" end). An O-ring groove is provided on either the inner surface of the bell or the outer surface of the spigot. An O-ring installed in the O-ring groove provides the fluid tight seal required to prevent leakage when the two pipes are mated. It is also desirable to provide some means for preventing pressure induced forces from pushing the spigot out of the bell. Several techniques have been used. Mechanically restraining the pipes with external clamps or bonding them together with adhesive are two examples.

In some bell and spigot joints both the inner surface of the bell and outer surface of the spigot are provided with circumferential grooves which are positioned adjacent to each other after the spigot is inserted into the bell. In a joint of this type, the O-ring groove still provides the seal for the fluid in the pipe. For mechanical attachment, however, a flexible "key" is inserted through a tangential hole in the bell and into the adjacent grooves. Once seated, this key essentially fills both grooves and provides mechanical securement of the pipes or fittings. This is because the key forces the adjacent key grooves to remain adjacent. The two pipes cannot move relative to each other without breaking either the key or one of the pipes. Although the key can be made of many different materials, such as different types of plastic or metal, it has been found that plastic keys provide the best joint strength. When under pressure, a plastic key will creep and form into the shape of the key grooves, providing an even load distribution around the entire circumference of the pipe.

O-ring and key grooves provided in the inside surface of the bell can be made by winding the uncured resin coated glass fibers on a mandrel having ridges of the size and shape of the desired O-ring and key grooves. However, the usual method used to create the key groove in the outer surface of the spigot is by machining the groove into a hardened, finished pipe. This method weakens the pipe in the area of the key groove because the fiber strands are cut to create the groove. Under high pressure conditions, the fiber reinforced plastic layers may shear at the depth of the cut groove.

The invention is directed to a method for forming indentations in the outer surface of fiber reinforced plastic pipe, the method comprising wrapping a mandrel with uncured resin coated fibers, and then pressing an indentation into the outside surface of the built up fibers without breaking appreciable numbers of them.

This method can involve the use of a clamp with an inside surface containing one or more raised ridges of the size and shape of the desired indentations. To form key grooves, this clamp may be made of two semi-cylindrical metal halves joined with a hinge, and be provided with circumferential ridges on the inside surface.

There is also provided by this invention fiber reinforced plastic pipes and fittings which contain indentations in their outer surface, and in which the fibers form substantially continuous strands along the entire length of pipe, including the portion of pipe adjacent to the indentation. Specifically, the indentations may form key grooves in fiber reinforced plastic pipes.

Furthermore, this invention relates to high strength bell and spigot joints for fiber reinforced plastic pipes and fittings, wherein the fiber strands in the region of the key groove in the spigot are not broken.

There is also provided in the practice of this invention an improved key for insertion into the adjacent key channels of a bell and spigot joint. The key comprises a metal core, surrounded by a thermoplastic coating.

FIG. 1 shows a longitudinal cross section of a bell and spigot type pipe joint, illustrating the relative placement of the pipe sections as well as the locations of the key and O-ring grooves.

FIG. 2 is an end view of a clamp used to impress a groove into the outer surface of an uncured fiber reinforced plastic pipe.

FIG. 3 is a longitudinal cross section of the clamp wall of FIG. 2, illustrating ridges for forming both the O-ring groove and the key groove.

FIG. 4 is a view of the wedge used to tighten the clamp over the uncured pipe.

FIG. 5 shows the clamp of FIG. 2, illustrating the interdigitating fingers of the clamp, and the channel which accepts the wedge shown in FIG. 4.

FIG. 6 shows the construction of a key containing a metal core with a thermoplastic sheath.

The invention disclosed involves bell and spigot type joints for fiber reinforced plastic pipes which are mechanically attached with keys and adjacent key grooves. In particular, the invention involves pipe sections in which the reinforcing glass fibers are substantially continuous, even through the regions of the adjacent key grooves.

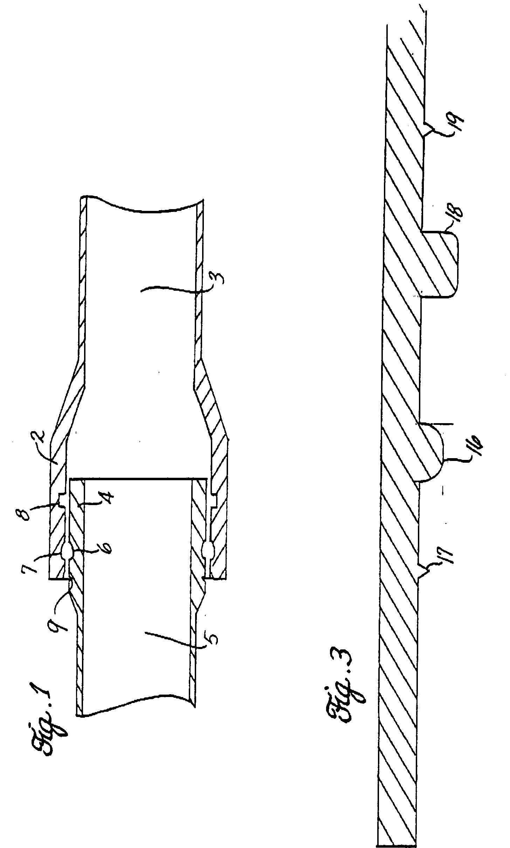

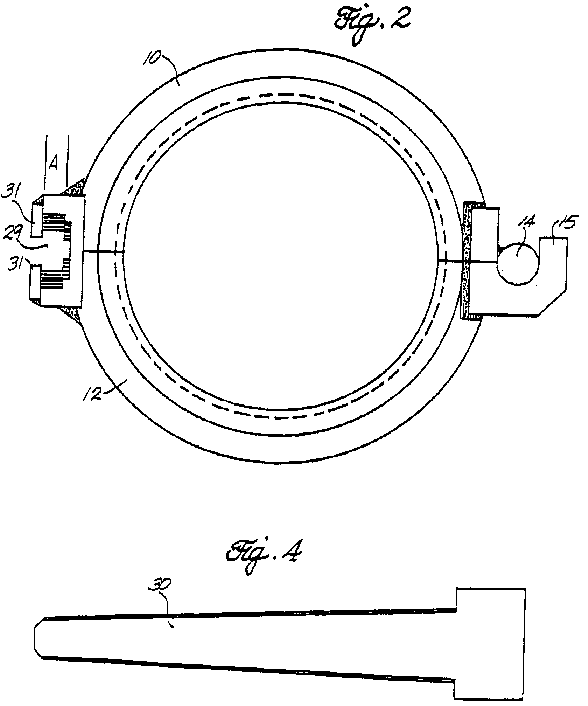

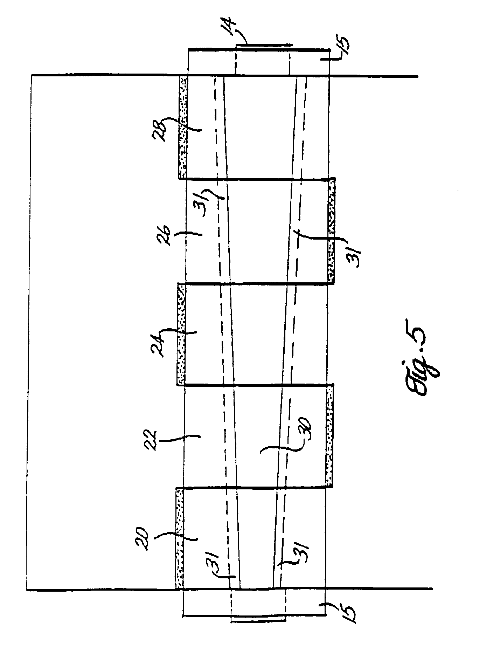

A joint between sections of adjacent fiber reinforced plastic pipe is shown in FIG. 1. The separate sections of pipe 3, 5 which are to be joined together are typically formed by winding a "roving", made up of several substantially continuous resin soaked glass fiber strands, back and forth along a mandrel until the resin soaked glass fibers reach the thickness of the desired pipe wall.

The joint is produced with two sections of fiber reinforced plastic pipe, typically of circular cross section and of the same or similar wall thickness. The end portions of the pipes, however, have differing diameters. The diameters of the end portions are sized such that the outside diameter of the end portion of one pipe 5 is approximately equal to but less than the inside diameter of the end portion of the other pipe 3. The larger end portion 2 is known as the "bell" end. The smaller end portion 4 is known as the "spigot" end. Either the bell 2 or the spigot 4 is provided with a continuous and circumferential O-ring groove 8, into which an O-ring is inserted, for a fluid tight seal. There is no crucial advantage or disadvantage in placing the O-ring groove 8 in the bell 2 rather than the spigot 4, either is acceptable.

Both the bell and spigot are also provided with key grooves 6, 7. The key grooves are each located axially such that after the spigot is inserted into the bell, the key grooves are adjacent to each other. One method for accomplishing this is to place a small but visible circumferential notch or scratch 9 in the external surface of the spigot. This notch is placed inwardly from the end of the spigot such that when the spigot is inserted into the bell to its intended depth, the notch 9 lines up with the end of the bell. The axial placement of the key groove in the outer surface of the spigot 6 is determined by placing it an equal distance outwardly from the notch 9 as the key groove in the inner surface of the bell 7 is placed inwardly from the end of the bell.

The glass fibers reinforcing the bell are substantially continuous throughout the bell wall, even in the region of the bell key groove 7 and O-ring groove 8. This can be accomplished by initially forming the bell section on a mandrel having circumferential ridges of the shape and size of the desired grooves 7, 8. Furthermore, the reinforcing glass fibers in the wall of the spigot, are substantially continuous, even through the region of the spigot key groove 6. This, however, cannot be accomplished with a ridged mandrel, because the spigot key groove 6 is in the outer surface of the spigot.

If the spigot key groove is impressed into the surface of the pipe after the resin coated glass fibers are wound on the mandrel, but before the resin is cured, the glass fiber strands are forced to shift and form the spigot key groove, and therefore need not be cut. This results in increased shear strength of the key region, and a pipe joint which can withstand higher pressures before failing. To impress key grooves into the outer surface of the spigot and of fiber reinforced plastic pipe sections, without breaking appreciable fibers, a clamp apparatus having circumferential ridges in its inner surface can be used. This steel clamp is forced around an uncured pipe wound on a mandrel, forcing the ridges into the surface of uncured glass fiber strands.

The steel clamp comprises two semi-cylindrical halves 10, 12 hold together axially along one edge with a hinging apparatus 14, 15. The inside diameter of the semi-cylindrical halves should be approximately equal to the outside diameter of the spigot to be formed. Typically, the axial length of the clamp will be approximately equal to the axial length of the spigot to be formed, but it need not extend the spigot's entire length.

The hinging device may comprise a steel rod 14 slightly longer than the axial length of the clamp, welded to one semi-cylindrical half 10 along one straight edge. In normal use, the semi-cylindrical half 10 with the rod 14 welded to it will be the top half. The bottom semi-cylindrical half 12 has two U-shaped lugs 15, each with an inner diameter approximately equal to the diameter of the rod 14. These lugs 15 are welded to the circular edges, at the corners where the straight and circular edges meet. The top clamp half can be lowered over the bottom clamp half, to form a complete cylinder, until the extending ends of the rod rest in the U-shaped lugs. The top clamp half is then capable of rotating about the axis of the rod welded to it, thereby allowing the opening and closing of the clamp along the opposite straight edges of the two clamp halves.

The inside surface of the clamp halves have two circumferential raised ridges, one with the profile of a desired O-ring groove 18, and one with the profile of a desired key groove 16. To create the marker notch 9 in the spigot discussed above, an additional circumferential ridge 17, preferably of narrow wedge shape, can be provided inwardly of the O-ring and key grooves. A similar circumferential ridge 19 can be provided outwardly of the O-ring and key grooves to denote a suitable place to cut the pipe off, forming the end of the spigot.

Formation of the desired O-ring and key grooves requires sufficient clamping pressure around the uncured pipe to force the ridges on the inside surface of the clamp into the outside surface of the spigot. With sufficient pressure, the ridges provided on the inside surface of the clamp will create indentations of shape and depth approximately complementary to the shape and height of the ridges provided. Several techniques might be used to apply the needed pressure. In one embodiment, the semi-cylindrical halves of the clamp are provided with five interdigitating fingers 20, 22, 24, 26, 28, each of width approximately equal to one fifth of the axial length of the clamp. Two of the fingers 22, 26 are welded to the outer surface of one of the clamp halves, and three of them 20, 24, 28 are welded to the outer surface of the other half. They are alternated, such that any one finger is welded to one clamp half and its adjacent neighbors are welded to the other clamp half. Each of the five interdigitating fingers extends across the opening of the clamp which is diametrically opposed to the hinge. Each finger is provided with a tapered channel of varying width 29, of T-shaped cross section and of uniform depth A. The tapered channels are intended to accept the insertion of a tapered wedge 30, which has a length approximately equal to the axial length of the clamp. Each channel is provided with side flanges 31, which can partially or totally cover the channel, and which prevent the wedge from coming out of the channel after it has been inserted. The width of the channel in each finger is such that the channel width on each side of the finger is equal to the channel width of the directly adjacent finger. When the hinge is closed and the clamp halves are joined, the channels of all the fingers form a single, continuous, and constantly tapering channel from one end of the clamp to the other, of substantially the same dimensions as the wedge 30.

The apparatus described can be used to form grooves in the outer surface of a fiber reinforced plastic pipe. A fiber reinforced pipe is wound on a mandrel in the conventional manner, either with a continuous single strand, or a multi-stranded roving. Prior to curing the resin and removing the pipe from the mandrel, the clamp is opened, and placed over the uncured pipe. The clamp is manually closed around the uncured resin pipe until the tapered channels in the interdigitating fingers begin to overlap. After the channels have overlapped sufficiently, the tapered wedge 30 is inserted into the widest portion of the finger channels. Because of the taper, the wedge 30 is easily inserted most of the way through all of the finger channels 29. At the end however, because the clamp must be forced over the pipe to close completely, resistance will be encountered. The tapered wedge is driven the rest of the way into the finger channels with moderate force, thereby forcing the clamp hinge closed, and thus forcing the ridges on the inside surface of the clamp halves into the outer surface of the uncured resin pipe surface. The glass strands are indented and displaced by the ridges on the inside of the clamp, but remain substantially unbroken. Other methods might be used to close such a clamp over an uncured pipe, such as clamping or bolting together flanges which might be provided along the longitudinal edge of each clamp half opposite the hinge.

After the clamp is in place as described, the fiber reinforced plastic pipe is cured and the clamp is removed, leaving the O-ring and key grooves impressed into the outer surface of the pipe.

The apparatus described above permits the formation of both O-ring and key grooves in the outer surface of fiber reinforced plastic pipe without breaking appreciable fiber strands. It is not, however, necessary that the O-ring groove be pressed into the spigot end in this manner. Since it does not provide mechanical strength to the joint, it can be either machined into the spigot end, or provided in the inside surface of the bell end using those techniques already known in the industry.

There is some advantage to placing the O-ring groove into the bell end by winding the bell on a mandrel having a complementary O-ring ridge. When grooves are impressed into a spigot with a clamp, a small amount of uncured resin will creep between the two clamp halves as they are pressed together, leaving a bit of solid residue in the bottom of the O-ring groove. Although this does not affect the performance of the key groove, extra effort must be expended to remove this "flash" from the bottom of the O-ring groove, because it may prevent the formation of a proper O-ring seal.

It is also true that other groove configurations in addition to continuous circumferential grooves could be created. Examples of other configurations and types of circumferentially extending grooves are several axially separated key grooves in one pipe, grooves which do not extend around the complete circumference of the pipe, or helical grooves, extending several revolutions around the pipe. Any shape indentation or groove configuration which can be machined or cast onto the inside surface of the clamp can be pressed into the outside surface of the pipe.

Pipe fittings such as elbows and tees can also be formed by winding resin coated glass strands on appropriately shaped mandrels. Continuously reinforced key grooves provide the same benefits for these fittings as for adjacent sections of straight pipe, and the method disclosed above is equally applicable to spigot ends of such fittings. Thus, as used herein, the word "pipe" includes fittings for pipe as well as simply straight sections of pipe.

When both the spigot and bell key grooves are formed without breaking appreciable numbers of fiber strands, the high pressure failure mode is failure of the key, rather than failure of the pipe at the key groove, as is the case with pipe incorporating a cut key groove in the spigot end. For this reason, high pressure performance is further enhanced by using a new type of key which is capable of taking advantage of the increased pipe strength provided by non-machined spigot grooves.

Although keys made of plastic and keys made of metal have been used, a plastic key provides a stronger joint. Even though its shear strength is less than metal, thermoplastic will deform to precisely fit the channel. This creates a more even load distribution around the entire circumference.

To achieve both the high shear strength of metal with the flexibility and ductility of plastic, a key comprising a metal core embedded in a thermoplastic coating can be used. With this type of key, high shear strength is obtained by the metal core and even load distribution is obtained from the ductile thermoplastic coating.

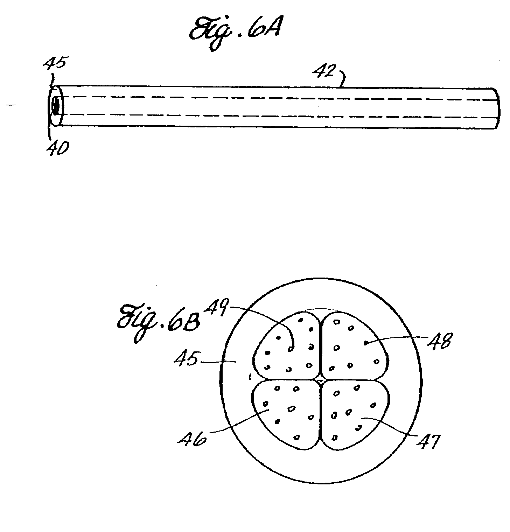

An embodiment of such a key is shown in FIG. 6. Typically, the key 42 is circular in transverse cross section and has a length approximately equal to the outer diameter of the spigot. The key cannot be longer than the key grooves into which it will be inserted, but it may be shorter. If helical key grooves are provided, the key may be much longer than the spigot circumference in order to extend the entire length of the helical grooves.

It is usual that the open volume created by the adjacent key grooves is approximately filled by the key, although the fit must be loose enough to allow insertion after formation of the joint. It should also be noted that the cross sectional shape of the key is not necessarily the same as the cross sectional shape of the space created by the adjacent key grooves. For instance, keys with an oval cross section may be inserted into key grooves of circular cross section.

The core of the key 40 is comprised of four steel cables twisted together, each cable 46, 47, 48, 49 being further comprised of a plurality of smaller steel strands. The coating 45, is preferably polyamide, although various other thermoplastic materials might be used. It is important that the region where the coating 45 and the core 40 come into contact be as free of air as possible. To accomplish this, the core and coating can be co-extruded, or the core can be dipped in a liquid form of the coating. When coated, the diameter of the metal core should be approximately 50 to 75% of the total diameter of the key.

The core need not be comprised of several stranded steel cables. Other acceptable forms include a single cable, or a solid metal core. Metal other than steel, such as aluminum or copper, may also be used.

Although limited embodiments of fiber-reinforced plastic pipe joints and technques have been described, various modifications and variations will be apparent to those skilled in the art. For example, instead of pressing a rigid form with a ridge into the uncured pipe, one may install of form surrounding the pipe and inflate a tubular body that expands into the resin and displaces fibers without breaking appreciable fibers. Grooves may be formed in other fiber reinforced bodies by this technique and such grooves may be used for purposes different from the pipe joint described and illustrated. Preferably the cross-sectional area of the metal core is in the range of from about 50 to 75% of the total cross-sectional area of the key.

## Claims

1. A fibre reinforced plastic pipe, incorporating a circumferentially extending key groove in its outer surface, in which the fibre strands are substantially continuous along the entire length of pipe, including the portion adjacent to the key groove.

2. A joint between two adjacent sections of fibre reinforced plastic pipe, the joint comprising:
a first section of pipe;
a second section of pipe, with an end having an outer diameter approximately equal to but less than the inner diameter of an end of the first section, the end of the second section inserted into the end of the first section;
a circumferentially extending key groove in the inner surface of the first section;
a circumferentially extending key groove in the outer surface of the second section, located adjacent to the key groove in the first section;
each of the sections having substantially unbroken fibre reinforcement through the regions containing the key grooves; and
a flexible key seated in the adjacent key grooves.

3. A joint according to Claim 2, wherein the key comprises a metal core embedded in a thermoplastic coating.

4. A joint according to Claim 3 or to Claim 4, wherein the plastic coating is a thermoplastic polyamide.

5. A joint according to any one of Claims 2 to 4, wherein the core is a cable comprising multiple strands of metal wire.

6. A joint according to any one of Claims 2 to 5, wherein the cross-sectioned area of the metal core is in the range of from 50 to 75% of the total cross-sectional area of the key.

7. A method of making a fibre reinforced plastic pipe comprising the steps of:
wrapping a pipe on a mandrel with substantially continuous reinforcing fibres coated with uncured resin;
pressing a form into the outside surface of the pipe for making an indentation in the outside surface without breaking appreciable fibres; and
curing the resin with the form in place.

8. A method according to Claim 7, wherein the pressing step comprises pressing a form into the outside surface of the pipe for making a circumferentially extending groove in the outside surface without breaking appreciable fibres.

9. A method according to Claim 8, wherein the pressing step comprises encompassing the end portion of the pipe with a portion of a form and pressing another portion of the form into the surface for forming a circumferentially extending groove in the outside surface of the pipe without breaking appreciable fibres.

10. A method according to Claim 8, wherein the pressing step comprises closing a clamp around the end portion of the pipe, the clamp being made of two semi-cylindrical metal halves joined with a hinge, each clamp half having a circumferentially extending ridge on its inside surface, the ridge being complementary to the groove to be formed in the pipe.
